# EUROPÄISCHE PATENTSCHRIFT

(11) **EP 2 137 664 B1**
(45) Veröffentlichungstag und Bekanntmachung des Hinweises auf die Patenterteilung: **04.09.2013**
(21) Anmeldenummer: 08716553.6
(22) Anmeldetag: 14.03.2008
(51) Int. Cl.: G06F 21/84, G06F 21/64

(54) **VERFAHREN ZUR ERZEUGUNG BESTÄTIGTER TRANSAKTIONSDATEN UND VORRICHTUNG DAZU**
METHOD FOR PRODUCING ACKNOWLEDGED TRANSACTION DATA AND CORRESPONDING DEVICE
PROCÉDÉ DE PRODUCTION DE DONNÉES DE TRANSACTION CONFIRMÉES ET DISPOSITIF À CET EFFET

(30) Priorität: 16.03.2007 DE 102007013287
(43) Veröffentlichungstag der Anmeldung: 30.12.2009
(73) Patentinhaber: Giesecke & Devrient GmbH, 81677 München (DE)
(72) Erfinder: SCHERZER, Helmut, 72070 Tübingen (DE); ROTH, Hans-Jürgen, 81671 München (DE); BALDISCHWEILER, Michael, 81825 München (DE)
(74) Vertreter: Branzka, Thomas
(86) Internationale Anmeldenummer: PCT/EP2008/002061
(87) Internationale Veröffentlichungsnummer: WO 2008/113521

(56) Entgegenhaltungen:
- WO-A-00/73879

## Beschreibung

Die Erfindung betrifft die zuverlässige und unangreifbare Erzeugung von bestätigten Transaktionsdaten bei der Durchführung von sicherheitskritischen Transaktionen unter Verwendung üblicher Datenverarbeitungsmittel in einer grundsätzlich angreifbaren Netzwerkumgebung. Unter anderem richtet sich die Erfindung insbesondere auf die Erzeugung sicherer Transaktionsdaten bei der Durchführung von Zahlungen an einem persönlichen Computer über das Internet.

Ein besonderes Problem bei der Durchführung von sicherheitskritischen Anwendungen, in deren Rahmen ein Nutzer sensible Dateneingaben vornehmen oder bestätigen muß, besteht darin sicherzustellen, daß eine auf einem Bildschirm wiedergegebene Information mit einer von dem Nutzer tatsächlich gewollten Information übereinstimmt. Herkömmliche Computersysteme, vor allem persönliche Computer, sind gerade über die Anzeigen auf dem Bildschirm angreifbar, indem etwa mit Hilfe eines zuvor auf den persönlichen Computer eingeschleusten Schadprogrammes eine Anzeige erzeugt wird, die dem Nutzer die ordnungsgemäße Durchführung einer von ihm gewählten Anwendung vorspielt, während tatsächlich mit anderen als den vom Nutzer gewünschten Transaktionsdaten eine andere Anwendung ausgeführt wird. Möglich werden solche Angriffe, weil in einem persönlichen Computer typischerweise dieselbe CPU bei der Ausführung einer Anwendung den Datenaustausch zum Hintergrundsystem, zu der Nutzereingabeeinrichtung und zu dem Bildschirm steuert. Über die Verbindung zu dem Hintergrundsystem kann entsprechend vergleichsweise einfach in den Datenaustausch mit der Nutzereingabeeinrichtung und den Bildschirm eingegriffen werden.

Zur Verhinderung derartiger Angriffe wurde bereits vorgeschlagen Zusatzgeräte einzusetzen, die zumindest zeitweilig eine sichere Verbindung zwischen Nutzereingabeeinrichtung und Bildschirm schaffen. Eine derartige Lösung ist aus der Veröffentlichung der Fa. TOWITOKO "Chip drive monitor kit macht digitale Signatur sicherer" 1999, bekannt. Danach wird zwischen die CPU des persönlichen Computers, Eingabeeinrichtung und Bildschirm ein Zusatzgerät geschaltet, mit dem unter vorübergehender Ausschaltung der CPU eine direkte Verbindung zwischen Nutzereingabeeinrichtung und Bildschirm herstellbar ist. Das Zusatzgerät besitzt dazu eine eigene Anzeigevorbereitungseinheit sowie eine Monitorweiche, mittels derer über das Zusatzgerät für die Eingabe sensibler Transaktionsdaten vorübergehend eine Direktverbindung zwischen Nutzereingabeeinrichtung und Bildschirm geschaffen wird. Ein Nutzer sieht dann auf dem Monitor die tatsächlich von ihm an der Eingabeeinrichtung vorgenommenen Eingaben. Die Lösung gestattet die vertrauenswürdige Erzeugung bestätigter Transaktionsdaten, ist aber durch das Erfordernis eines Zusatzgerätes aufwendig und entsprechend teuer. Zudem beeinträchtigen die mit den Umschaltvorgängen beim Betätigen der Monitorweiche verbundenen Auf- und Abbauzeiten der Anzeige die Nutzerfreundlichkeit.

Aus der US 5,701,342 A ist ein Verfahren zur Erzeugung von vertrauenswürdigen Dokumenten in einer unsicheren Computerumgebung bekannt, bei dem mit Hilfe eines Filters sichergestellt wird, daß der Nutzer den tatsächlichen Inhalt des Dokuments angezeigt bekommt. Ein eingesehenes Dokument wird mit Hilfe eines Siegels gesichert. Die Sicherheit des Verfahrens hängt vor allem von der Qualität des Filters ab. Die Bereitstellung eines leistungsfähigen Filters ist jedoch aufwendig.

Aus der WO 00/73879 ist eine Anzeigevorbereitungseinheit bekannt, welche eine Signatur über angezeigte, gespeicherte Bilddaten erzeugt.

Es ist Aufgabe der Erfindung eine Anordnung anzugeben, die bei gleicher Leistungsfähigkeit wie die bekannte kostengünstiger herzustellen und einfacher handzuhaben ist.

Diese Aufgabe wird gelöst durch ein Verfahren mit den Merkmalen des Anspruchs 1 sowie einer Vorrichtung mit den Merkmalen des unabhängigen Anspruchs 12 und einem System gemäß Anspruch 18. Das erfindungsgemäße Verfahren und die erfindungsgemäße Vorrichtung beruhen auf dem Ansatz, in einem persönlichen Computer eine Sicherheits-Hardware bereitzustellen, die gewährleistet, daß kein anderer als der Nutzer eine auf dem Monitor dargestellte Anzeige bestätigt und damit eine auf dem Monitor dargestellte Transaktion ausschließlich durch eine tatsächliche Eingabe eines Nutzers ausgelöst werden kann. Weiter stellt die erfindungsgemäße Vorrichtung sicher, daß nur der Inhalt einer tatsächlich bestätigten Anzeige Gegenstand einer Transaktion wird. Durch Einrichtung einer gesonderten Schnittstelle auf der Anzeigevorbereitungseinheit, die es erlaubt, Eingaben eines Nutzers unter Umgehung der CPU direkt an die Sicherheits-Hardware zu leiten, wird sichergestellt, daß eine Anzeige dem entspricht, was ein Nutzer eingegeben hat. In einer alternativen Ausführung erfolgt der Nachweis, daß eine Anzeige mit einer Nutzereingabe übereinstimmt mittels einer von der Sicherheits-Hardware erzeugten Zufallszahl, die auf der Anzeige dargestellt wird und vom Nutzer wiedergegeben werden muß. Die erfindungsgemäße Vorrichtung hat den Vorteil, daß sie ohne Zusatzgerät auskommt. Stattdessen ist es nur erforderlich leichte Eingriffe in die Struktur einer üblichen Grafikkarte vorzunehmen. Dies kann insbesondere sehr kostengünstig erfolgen. Erfindungsgemäße Anzeigevorbereitungseinheiten können standardmäßig in persönliche Computer integriert oder leicht nachgerüstet werden.

Auch vereinfacht sich die Handhabung der erfindungsgemäßen Vorrichtung. Das erfindungsgemäße Verfahren zeichnet sich insbesondere dadurch aus, daß es zu seiner Durchführung keinerlei besonderer Handlungen durch einen Nutzer bedarf. Anhand der direkten physischen Anbindung der Nutzereingabeeinrichtung an die Anzeigevorbereitungseinheit kann ein Nutzer sich jederzeit leicht davon überzeugen, daß über die Eingabeeinrichtung vorgenommene Eingaben ohne Umweg über die CPU des persönlichen Computers an die Anzeigevorbereitungseinheit gelangen. Damit wird offensichtlich, daß jedenfalls Angriffe durch Schadprogramme über die CPU nicht möglich sind. Indem die Bestätigung der zu bestätigenden Transaktionsdaten auf der Grafikkarte ohne Einschaltung der CPU erfolgt, ist zudem tatsächlich sehr zuverlässig gewährleistet, daß Transaktionsdaten nicht durch Schadprogramme manipuliert werden können. Selbst wenn es einem Schadprogramm gelingen sollte den Grafikprozessor der Anzeigevorbereitungseinheit so zu manipulieren, daß auf dem Monitor eine Anzeige erscheint, die optisch mit einer von einer Konvertereinheit erzeugten übereinstimmt, hätte eine Bestätigung der angezeigten Daten durch einen Nutzer keine Folgen, da die Kryptoeinheit in diesem Fall dennoch keine signierbaren Daten vorfinden und eine Signatur deshalb nicht erzeugt werden würde.

Die zweite Ausführungsform der Erfindung, gemäß der die Bestätigung von Transaktionsdaten mittels einer durch die Anzeigevorbereitungseinheit erzeugten Zufallsinformation erfolgt, in Reaktion auf die vom Nutzer entweder mittels einer Eingabeeinrichtung wiederholt die angezeigte Zufallsinformation oder deren Position auf dem Monitor eingegeben werden müssen, hat den besonderen Vorteil, daß mit einer auf übliche Weise angeschlossenen Eingabeeinrichtung gearbeitet werden kann. Eine zusätzliche Schnittstelle auf der Anzeigevorbereitungseinheit kann entfallen.

Vorteilhaft erfolgt die Darstellung der zu bestätigenden Transaktionsdaten auf dem Monitor in einem Teilbereich der Anzeige, während der restliche Teil der Anzeige in normaler Weise gemäß den von der CPU gelieferten Grafikdaten wiedergegeben wird. Um einem Nutzer das Eingreifen der erfindungsgemäßen Anzeigevorbereitungseinheit zu signalisieren ist im Rahmen des erfindungsgemäßen Verfahrens vorteilhaft vorgesehen, daß nach Übergang der Grafikkarte in den Sicherheitsmodus zunächst ein vorgegebenes Startbild angezeigt wird, das der Nutzer bestätigt.

Weitere vorteilhafte Weiterbildungen und zweckmäßige Ausgestattungen ergeben sich aus den Merkmalen der abhängigen Ansprüche.

Unter Bezugnahme auf die Zeichnung wird nachfolgend ein Ausführungsbeispiel der Erfindung näher erläutert.

Es zeigen:
Fig.1 in Blockdarstellung die Struktur eines Systems zur Ausführung einer sicherheitskritischen Transaktion mit einer Anzeigevorbereitungseinheit gemäß der Erfindung,
Fig. 2 ein Flußdiagramm des Ablaufs einer Ausführung einer sicherheitskritischen Anwendung auf dem in Fig.1 gezeigten System,
Fig. 3 eine Veranschaulichung des Ablaufs einer Transaktionsausführung in einer Mischdarstellung aus Hardwarekomponenten und Ablaufschritten und
Fig.4 eine Nutzereingabe in Reaktion auf die Anzeige einer Zufallsinformation in Form des Nacheinander-Anwählens einer Folge von angezeigten Ziffern.

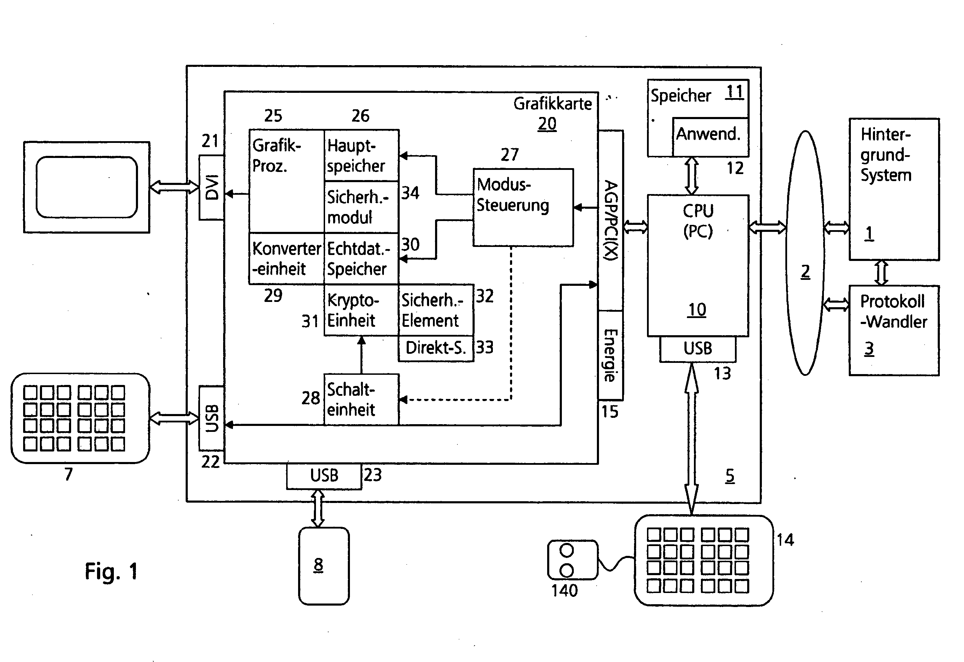

Das in Fig.1 gezeigte System besteht grundsätzlich aus einem Hintergrundsystem 1, einem Datennetz 2 und einem persönlichen Computer 5, der mit einem Monitor 6, einer Eingabeeinrichtung 7 und/ oder einer Eingabeeinrichtung 14 und einer Authentifizierungseinrichtung 8 verbunden ist.

Das Hintergrundsystem 1 stellt in Software realisierte Dienstleistungen bereit, die mit Hilfe von jeweils geeigneter Anwendungssoftware durch Nutzer über das Datennetz 2 abrufbar sind, um jeweils dienstleistungsspezifische Transaktionen durchzuführen. Typische Dienstleistungen sind etwa die Durchführung von Bankgeschäften, die Durchführung von Kreditkartentransaktionen, der Erwerb von Gütern aller Art über das Internet oder die Durchführung von Börsengeschäften. Im Rahmen des Abrufs dieser Dienstleistungen werden sicherheitskritische Transaktionen durchgeführt, typischerweise die Vornahme von Geldbewegungen, das Erbringen von Identifizierungen oder das Übertragen von zu bezahlenden Daten.

Das Datennetz 2 vermittelt den Datenaustausch zwischen einem persönlichen Computer 5 und dem Hintergrundsystem 1. Es kann zur Realisierung dieser Aufgabe Zwischeneinheiten aufweisen. Insbesondere können Protokollwandlereinheiten 3 vorgesehen sein, die in einem auf einem persönlichen Computer 5 verwendeten Protokoll vorliegende Transaktionsdaten umsetzen in an ein Hintergrundsystem 1 angepaßtes Protokoll.

Der persönliche Computer 5 ist grundsätzlich wie ein üblicher Computer aufgebaut und besitzt alle dafür typischen Elemente; Fig.1 zeigt davon die für die Erfindung bedeutsamen. Kernelement des persönlichen Computers 5 ist eine zentrale Prozessoreinheit (CPU) 10, die mit einer Speichereinrichtung 11, über das Datennetz 2 mit dem Hintergrundsystem 1, sowie über eine kombinierte Bus/Energieschnittstelle 15 mit einer Anzeigevorbereitungseinheit 20 verbunden ist. In einer zweiten Ausführung der Erfindung kann der persönliche Computer ferner über eine Schnittstelle 13 mit einer Eingabeeinrichtung 14 verbunden sein. Der persönliche Computer 5 hat typischerweise die Bauform eines Desktops, eines Laptops oder eines Terminals und wird im Heimbereich einer Privatperson oder in Unternehmen oder Behörden eingesetzt.

Die Anzeigevorbereitungseinheit 20 ist vorzugsweise als separate Platinenbaugruppe ausgebildet und ist innerhalb des Gehäuses des persönlichen Computers 5 untergebracht, wo sie über eine Bus/Energieschnittstelle 15 mit der CPU 10 verbunden ist. Alternativ kann die Anzeigevorbereitungseinheit 20 auch als separate Chipeinheit auf derselben Platine wie die CPU 10 realisiert sein. Die Energieversorgung der Anzeigevorbereitungseinheit 20 erfolgt über den persönlichen Computer 5. Über eine gängige externe Schnittstelle 21 ist die Anzeigevorbereitungseinheit 20 mit dem Monitor 6 verbunden. Darüberhinaus besitzt die Anzeigevorbereitungseinheit 20 optional eine weitere externe Schnittstelle 22, über die Sie direkt mit einer Nutzereingabeeinrichtung 7 verbunden ist. Optional kann sie ferner noch eine weitere externe Schnittstelle 23 zum Anschluß einer Authentifizierungseinrichtung 8 aufweisen. Die Authentifizierungseinrichtung 8 kann insbesondere ein transportables, persönliches Medium eines Nutzers sein, etwa in Form einer Chipkarte oder eines USB-Tokens, aber auch eine stationäre Einheit, etwa ein Sensor zur Aufnahme eines biometrischen Merkmals.

Die Speichereinrichtung 11 des persönlichen Computers 5 ist in üblicher Weise ausgeführt und besitzt insbesondere einen nichtflüchtigen Bereich. Darin ist eine Anwendungssoftware 12 zur Ausführung einer Anwendung gespeichert, die es erlaubt eine Transaktion auszuführen, mit der eine über das Hintergrundsystem 1 angebotene Dienstleistung in Anspruch genommen wird. Die Anwendungssoftware 12 kann eine dauerhaft auf dem persönlichen Computer 5 gespeicherte Software sein, etwa eine Software zur Teilnahme am "Homebanking" oder eine nur vorübergehend, etwa für die Dauer der Durchführung einer Transaktion benötigte Software, wie etwa eine Software zur Verwaltung von Anmeldedaten für den Bezug einer Ware von einem Internetwarenanbieter. Typischerweise ist die Anwendungssoftware 12 nicht vollständig in der Speichereinrichtung 11 vorhanden sondern nur soweit, wie das zur Erzeugung von Transaktionsdaten notwendig ist. In der Regel beschränkt sich die Anwendungssoftware deshalb vor allem auf die Bereitstellung von auf dem Monitor 7 anzeigbaren Menüs zur Eingabe von Transaktionsdaten. Die Anwendungssoftware 12 wird nachfolgend einfach als Anwendung bezeichnet.

Der Monitor 6 ist von einem üblichen Typ und dient zur bildlichen Visualisierung von Pixelgrafiken.

Die Eingabeeinrichtung 7 - und ebenso die Eingabeeinrichtung 14 - ist typischerweise eine Tastatur und oder eine Maus 140, kann aber auch eine Spracheingabevorrichtung oder jede andere Vorrichtung zur Vornahme von Dateneingaben durch einen Nutzer sein. In einer ersten, zunächst beschriebenen Ausführung der Erfindung weist der persönliche Computer 5 eine Eingabeeinrichtung 7 auf, die über die Anzeigevorbereitungseinheit 20 an den persönlichen Computer 5 angeschlossen ist. In einer zweiten Ausfüh-rung besitzt der persönliche Computer 5 eine direkt auf die CPU wirkende Eingabeeinrichtung 14.

Die Authentifizierungseinrichtung 8 kann beispielsweise ein Gerät zum Auslesen von Chipkarten, ein Fingerabdruckprüfer, ein Iris-Scanner oder dergleichen sein.

Die Anzeigevorbereitungseinheit 20 basiert auf einer üblichen Grafikkarte und weist grundsätzlich alle dafür typischen Komponenten auf. In Fig. 1 sind davon nur die im Zusammenhang mit der vorliegenden Erfindung bedeutsamen Komponenten dargestellt. Die Darstellung der Komponenten in Blockform dient dabei nur zur Vereinfachung der Beschreibung. Darstellung und Beschreibung der Komponenten sowie ihrer Verbindungen sind vor allem logisch zu verstehen. Die in Fig.1 dargestellte Struktur muß sich deshalb in einer tatsächlichen schaltungstechnischen Ausführung einer Anzeigevorbereitungseinheit keineswegs real wiederfinden. Alle Komponenten können bei gleicher Funktionalität vielmehr physisch in anderer Zusammenstellung und insbesondere in Form von Softwareprogrammen ausgebildet sein. Für die Beschreibung wird im weiteren davon ausgegangen, daß die Anzeigevorbereitungseinheit 20 als separate Platinenbaugruppe ausgeführt ist.

Die im folgenden Grafikkarte genannte Anzeigevorbereitungseinheit 20 ist über die kombinierte Bus/Energieschnittstelle 15 mit der CPU 10 verbunden. Die Bus/Energieschnittstelle 15 ist beispielsweise als AGB/PCI (X)- Steckschnittstelle ausgeführt, so daß die Grafikkarte 20 ohne weiteres von der CPU 10 und aus dem persönlichen Computer 5 getrennt werden kann. Über die Bus/Energieschnittstelle 15 tauscht die Grafikkarte 20 zum einen Daten mit der CPU 10 aus, zum anderen wird sie, zweckmäßig über die zentrale Energieversorgung des persönlichen Computers 5, mit Energie versorgt.

Hauptkomponente der Grafikkarte 20 ist - definitionsgemäß - ein Grafikprozessor 25, der zum einen über einen Hauptspeicher 26, eine Modussteuerung 27 und die Bus/ Energieschnittstelle 15 mit der CPU 10, zum anderen über die Monitorschnittstelle 21, die beispielsweise als DVI-Schnittstelle ausgeführt ist, mit dem Monitor 7 verbunden ist. Der Grafikprozessor 25 erzeugt aus Grafikdaten, die von der zentralen Prozessoreinheit 10 über die Bus/Energieschnittstelle 15 und die Modussteuerung 27 in den Hauptspeicher 26 geladen und dort verwaltet werden, Pixelgrafiken, die auf dem Monitor 7 als Bild zur Anzeige gebracht werden. Die Struktur der Grafikkarte 20 ist insoweit üblich.

Anders als übliche Grafikkarten besitzt die Grafikkarte 20 jedoch, gemäß der ersten Ausführung der Erfindung, eine eigene Schnittstelle 22 zum Anschluß einer Eingabeeinrichtung 7. Die Schnittstelle 22 ist über eine Schalteinheit 28 unmittelbar mit der Bus/Energieschnittstelle 15 zur CPU 10 verbunden, so daß in einem ersten Schaltzustand der Schalteinheit 28 über die Eingabeeinrichtung 7 vorgenommene Eingaben direkt an die CPU 10 geleitet werden.

Der Grafikprozessor 25 ist weiterhin mit einem Konvertermodul 29 verbunden. Das Konvertermodul 29 dient dazu, in einer Auszeichnungssprache vorliegende Daten, etwa im ASCII-Format vorliegende Daten oder XML-Daten, in Pixelwerte umzusetzen, die als Pixelgrafik auf dem Monitor 7 angezeigt werden. Die vom Konvertermodul 29 erzeugten Pixelwerte werden auf dem Monitor 7 vorzugsweise in einem gesonderten Fenster angezeigt, das einer vorhandenen, aus den Daten im Hauptspeicher 26 erzeugten Anzeige überlagert wird.

Das Konvertermodul 29 ist seinerseits mit einem Echtdatenspeicher 30 verbunden ist. Der Echtdatenspeicher 30 dient zur Aufnahme von zu interpretierenden Transaktionsdaten. Zum Erhalt von Transaktionsdaten ist der Echtdatenspeicher 30 mit der Modussteuerung 27 verbunden. Der Echtdatenspeicher 30 ist nur für die Modussteuerung 27, die Konvertereinheit 29 und die Kryptoeinheit 31 erreichbar. Ein direkter Zugriff über die Bus/Energieschnittstelle 15 insbesondere durch die CPU 10 ist nicht möglich.

Desweiteren ist der Echtdatenspeicher 30 mit einer Kryptoeinheit 31 verbunden. Deren Hauptfunktion besteht darin, nach erfolgter Bestätigung einer Anzeige durch einen Nutzer über die bestätigten Transaktionsdaten eine Signatur zu berechnen. Für die Entgegennahme einer Bestätigung durch einen Nutzer besitzt die Kryptoeinheit 31 eine mittels der Schalteinheit 28 schaltbare Verbindung zu der Eingabeeinrichtung 7.

Die Kryptoeinheit 31 ist weiter mit einem Sicherheitselement 32 verbunden, das alleine der Kryptoeinheit 31 zugeordnet und nur von dieser, jedenfalls aber nicht direkt durch die CPU über die Bus/ Energieschnittstelle 15 erreichbar ist. Zweckmäßig kann das Sicherheitselement 32 gegen physische Angriffe besonders geschützt sein. In dem Sicherheitselement 32 ist zum einen ein vorgegebenes Startbild für den Monitor 7 gespeichert, dessen Wiedergabe auf dem Monitor 7 einem Nutzer signalisiert, daß sich die Grafikkarte 20 im Sicherheitsmodus befindet. Das Startbild kann zum Beispiel eine vom Nutzer definierte, geheime Nachricht, ein persönliches Bild oder ein besonderes Icon sein. Vorzugsweise ist es nur dem berechtigten Nutzer bekannt und wird von ihm festgelegt oder geändert. Desweiteren befinden sich in dem Sicherheitselement 32 die beim Betrieb der Kryptoeinheit 31 benötigten nutzerspezifischen, persönlichen Daten. Dies können zum Beispiel eine PIN, ein Zertifikat oder ein Schlüssel zur Signatur oder zum Nachladen einer Applikation sein. Das vorgegebene Startbild ist zweckmäßig mittels eines definierten Kommandos gezielt aufrufbar und auf dem Monitor 7 anzeigbar. Weiter besitzt das Sicherheitselement 32 zweckmäßig eine eigene Direktschnittstelle 33. Darüber können zum einen neue oder weitere persönliche Nutzerdaten eingebracht werden. Zum anderen kann über die Direktschnittstelle 33 die erstmalige Personalisierung des Sicherheitselementes 32 erfolgen. Das Sicherheitselement 32 ist zweckmäßig als von der Grafikkarte 20 trennbare Einheit, etwa in Gestalt einer Chipkarte ausgeführt, so daß die in dem Sicherheitselement 32 gespeicherten Daten bei einem Wechsel der Grafikkarte 20 leicht auf eine andere Grafikkarte übertragen werden können.

Die Modussteuerung 27 nimmt die von der CPU 10 kommenden Daten entgegen und wertet sie daraufhin aus, ob es sich um normale Grafikdaten handelt oder um zu interpretierende Transaktionsdaten aus der Ausführung einer Anwendung. Im ersten Fall leitet die Modussteuerung 27 die Daten an den Hauptspeicher 26, im zweiten Fall an den Echtdatenspeicher 30. Aufgrund der Datenauswertung bewirkt die Modussteuerung 27 ferner das Umschalten der Grafikkarte 20 in einen Sicherheitsmodus. Hierzu ist sie mit der Schalteinheit 28 verbunden, die die Eingabeeinrichtung 7 in einem ersten Schaltzustand zu der Bus/Energieschnittstelle 15 durchschaltet und in einem zweiten Schaltzustand mit der Kryptoeinheit 31 verbindet. Die Modussteuerung 27 kann z.B. realisiert, indem die zu interpretierenden Transaktionsdaten ein Kommando zum Aufruf einer bestimmten Schnittstelle (API CALL) enthalten.

Die Grafikkarte 20 kann in zwei Moden betrieben werden, einem Standardmodus und einem Sicherheitsmodus. Im Standardmodus fungiert die Grafikkarte 20 als normale Grafikkarte und bringt von der CPU 10 zugeführte Grafikdaten als Bilder auf dem Monitor 7 zur Anzeige. Im Sicherheitsmodus ist das Konvertermodul 29 aktiv und die Eingabeeinrichtung 7 über die Schalteinheit 28 unmittelbar mit dem Kryptoeinheit 31 verbunden. Die Konvertereinheit 29 erzeugt dann zu einem zu interpretierenden, im Echtdatenspeicher 30 abgelegten Datensatz eine Monitor-Anzeige, prüft den Eingang einer Bestätigung durch den Nutzer und signiert anschließend den Datensatz.

Die Komponenten Konvertereinheit 29, Echtdatenspeicher 30, Kryptoeinheit 31, Sicherheitselement 32 und/oder Schalteinheit 28 sind technisch zweckmäßig als zusammenhängende, gegen Manipulation besonders gesicherte Baugruppe auf der Grafikkarte ausgebildet. Auf der Grafikkarte kann ferner ein separates als Hardwareelement ausgeführtes Sicherheitsmodul 34 angeordnet sein, das eine ordnungsgemäße Funktionsfähigkeit der Komponenten 25 bis 32 der Grafikkarte sicherstellt, indem es wichtige Funktionsparameter mit auf dem Sicherheitsmodul hinterlegten Referenzparametern vergleicht. Auf das Sicherheitsmodul kann nur von ausgewiesenen Stellen zugegriffen werden, wobei der Zugriff massiv kryptographisch gesichert ist. Das Sicherheitsmodul kann insbesondere die Form eines "Trusted Platform Moduls (TPM)" besitzen.

Die Einrichtung der Grafikkarte 20 erfolgt zweckmäßig, indem die Grafikkarte zunächst als im Standardmodus betreibbare, neutrale Grafikeinheit bereitgestellt wird, wobei der Sicherheitsmodus nur vorbereitet ist. Die Aktivierung des Sicherheitsmodus erfolgt dann zu einem späteren Zeitpunkt durch eine vertrauenswürdige Stelle, über die die benötigte Funktionalität in die neutrale Einheit eingebracht wird. Hierbei werden die gesamte Software zum Betrieb von Konvertereinheit 29, Echtdatenspeicher 30, Kryptoeinheit 31 und/ oder Sicherheitselement 32 oder zumindest wesentliche Teile davon, etwa die sicherheitskritischen und geheimen Daten, an die neutrale Grafikeinheit übertragen. Für die Übertragung wird zu der vertrauenswürdigen Stelle eine, mittels geeigneter kryptographischer Techniken gesicherte Ende-zu-Ende-Verbindung aufgebaut. Ein Schlüssel zur Herstellung einer solchen Verbindung kann dabei bereits im Rahmen der Vorbereitung des Sicherheitsmodus auf der neutralen Grafikeinheit hinterlegt sein.

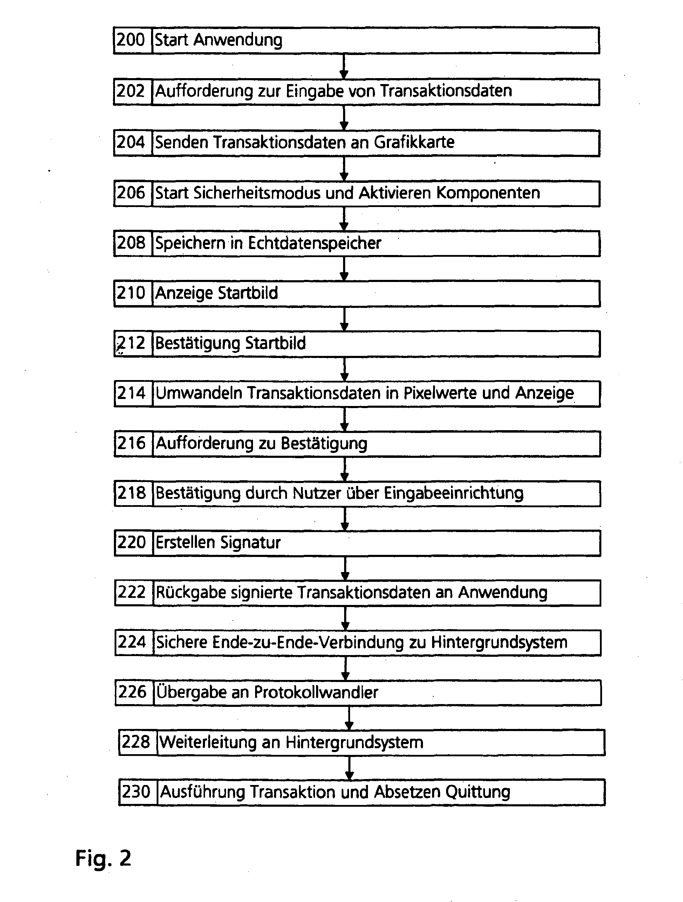

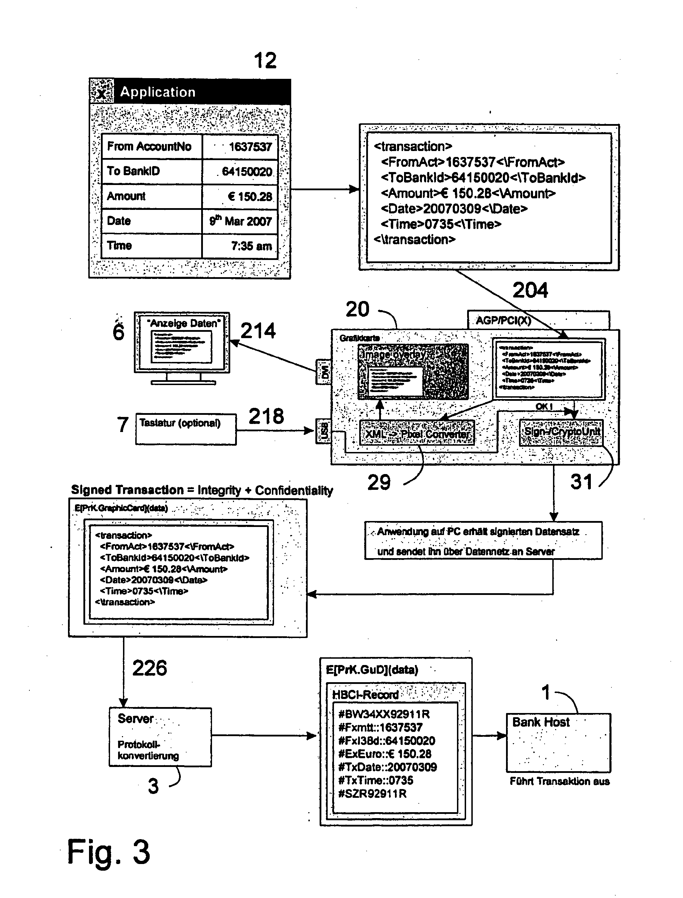

Anhand der Fig. 2 und 3 wird nachfolgend die Ausführung einer Transaktion auf Basis des zuvor beschriebenen Systems beispielhaft erläutert. Im Beispiel wird dabei von der Ausführung einer Banktransaktion ausgegangen, in deren Rahmen sicherheitskritische Angaben unter anderem zu Kontonummer und zu bewegendem Betrag gemacht werden.

Die Ausführung setzt ein, indem der Nutzer über die Bedieneinrichtung die zugehörige Anwendung startet, Schritt 200. Die Anwendung führt den Nutzer in bekannte Weise über entsprechende auf dem Monitor 6 dargestellte Menüs durch die Anwendung und fordert ihn zur Eingabe von Transaktionsdaten auf, Schritt 202. Transaktionsdaten können beispielsweise, wie aus Fig. 3 ersichtlich, sein: eine Kontonummer, eine Bankidentifikationsnummer, ein Betrag, ein Datum und eine Zeit. Bestimmte Angaben, wie Datum und Zeit können dabei von der Anwendung selbst generiert worden sein.

Die vom Nutzer daraufhin über die Bedieneinrichtung 7eingegebenen Transaktionsdaten bereitet die CPU als Satz von zu interpretierenden Auszeichnungsdaten auf, etwa, wie in Fig. 3 veranschaulicht, als XML-Daten und schickt diesen an die Grafikkarte, Schritt 204.

Der auf der Grafikkarte eingehende Datensatz wird von der Modussteuerung 27 als Transaktionsdaten erkannt. Die Modussteuerung 27 bewirkt daraufhin den Übergang der Grafikkarte 20 in den Sicherheitsmodus, Schritt 206. Hierzu aktiviert sie Konvertermodul 29, Kryptoeinheit 31 und Echtdatenspeicher 30 und veranlaßt die Schalteinheit 28 zur Verbindung der Eingabeeinrichtung 7 mit der Kryptoeinheit 31. Vorgesehen sein kann weiter, daß die Grafikkarte 20 die Entgegennahme weiterer Sätze von Transaktionsdaten aussetzt, bis der zunächst eingegangene Datensatz bestätigt ist.

Den Transaktionsdatensatz leitet die Modussteuerung 27 an den Echtdatenspeicher, Schritt 210.

Auf die Aktivierung des Sicherheitsmodus hin greift die Kryptoeinheit 31 auf das Sicherheitselement 32 zu und bringt das darin abgelegte Startbild auf dem Monitor 6 zur Anzeige, Schritt 210. Vorzugsweise erfolgt die Anzeige in einem "Overlay"- Fenster, d.h. über die vorhandene, aufgrund der Daten im Hauptspeicher 26 erzeugten Anzeige wird in einem Teilbereich der Monitoroberfläche ein separates Fenster eröffnet. Optional kann vorgesehen sein, daß der Nutzer das Startbild über die Eingabeeinrichtung bestätigen muß, bevor die zu bestätigenden Transaktionsdaten angezeigt werden, Schritt 212.

Das Konvertermodul 29 wandelt sodann die in den Echtdatenspeicher 30 gelegten zu interpretierenden Transaktionsdaten in Pixelwerte und bringt diese auf dem Monitor 6 in dem zuvor eröffneten Fenster zur Anzeige, Schritt 214.

Zusammen mit der Anzeige der Transaktionsdaten, d.h. in demselben Fenster auf dem Monitor, wird der Nutzer zur Bestätigung der Transaktionsdaten aufgefordert. Zugleich bewirkt die Schalteinheit 28 eine Verbindung der Eingabeeinrichtung 7 mit der Kryptoeinheit 31, Schritt 216.

Der Nutzer bestätigt nun über die durch die Aktivierung direkt mit der Kryptoeinheit 31 verbundene Eingabeeinrichtung 7 die Transaktionsdaten, Schritt 218. Die Bestätigung kann durch Betätigung einer oder mehrerer Standardtasten geschehen, erfolgt zweckmäßig aber, indem der Nutzer ein Folge von Eingaben vornimmt, wobei er beispielsweise einen Teil der Transaktionsdaten wiederholt. Alternativ oder ergänzend kann auch die Eingabe einer von der Kryptoeinheit 31 erzeugten und auf dem Monitor 6 angezeigten Zufallsinformation vorgesehen sein, wie sie später noch genauer erläutert wird.

In einer optionalen Ausgestaltung kann weiter vorgesehen sein, daß der Nutzer im Rahmen der Bestätigung eine Authentifizierung über eine Authentifizierungseinrichtung 8 vornimmt, etwa durch Präsentation einer Chipkarte, eines Authentifizierungstokens oder eines Fingerabdruckes. In einer Variante kann eine Authentifizierung auch durch Führung eines Datenaustausch zwischen der Kryptoeinheit 31 und einem Sicherheitsmodul des persönlichen Computers 5 erfolgen, von dem die Kryptoeinheit 31 beispielsweise einen Schlüssel erhält.

Die Bestätigung wird von der Kryptoeinheit 31 erkannt, indem sie beispielsweise vom Nutzer über die Eingabeeinrichtung 7 eingegebene Transaktionsdaten mit entsprechenden, im Echtdatenspeicher 30 gespeicherten Transaktionsdaten vergleicht. Sie entnimmt daraufhin aus dem Sicherheitselement 32 den dafür vorgesehenen Schlüssel und/oder das Zertifikat und erzeugt damit über die im Echtdatenspeicher 30 gespeicherten Transaktionsdaten eine Signatur, Schritt 220, z.B. durch Bilden eines Hashwertes über die Transaktionsdaten und anschließendes Verschlüsseln desselben. Die Signatur verbindet die Kryptoeinheit 31 mit den im Echtdatenspeicher 30 gespeicherten Transaktionsdaten zu signierten Transaktionsdaten. Sofern über die Authentifizierungseinrichtung 8 eine Authentifizierungsinformation eingegeben wurde, kann diese in die Bildung der Signatur einfließen.

Die signierten Transaktionsdaten übermittelt die Kryptoeinheit 31 anschließend über die Bus/Energieschnittstelle 15 zurück an die Anwendung 12, Schritt 222.

Die Anwendung 12 baut daraufhin, unter Verwendung bekannter Mechanismen, eine sichere Ende-zu-Ende-Verbindung zu dem Hintergrundsystem 1 auf, Schritt 224. In einer Variante kann vorgesehen sein, daß die Grafikkarte 20 selbst die sichere Ende-zu-Ende-Verbindung herstellt.

Im folgenden wird davon ausgegangen, daß die signierten Transaktionsdaten in einem Format vorliegen, das nicht unmittelbar zur Umsetzung der in den Transaktionsdaten definierten Banktransaktionen an ein Hintergrundsystem geschickt werden kann. Die Anwendung übermittelt die signierten Transaktionsdaten deshalb zunächst an eine Protokollwandlungseinrichtung 3, Schritt 226, welche die signierten Transaktionsdaten in ein Protokoll umsetzt, in dem sie zur Verarbeitung an ein Hintergrundsystem 1 geschickt werden können. Die Protokollwandlungseinrichtung 3 prüft dabei zweckmäßig zunächst die von der Kryptoeinheit 31 hinzugefügte Signatur und nimmt, Gutprüfung vorausgesetzt, anschließend die notwendige Protokollumformatierung vor. Die danach im Protokoll des Hintergrundsystems vorliegenden Transaktionsdaten übermittelt die Wandlungseinrichtung sodann an das Hintergrundsystem 1, Schritt 228.

Das Hintergrundsystem 1 führt die Transaktion gemäß den Transaktionsdaten aus. Anschließend kann vorgesehen sein, daß das Hintergrundsystem 1 eine Quittung an die Anwendung 12 zurückschickt, Schritt 230. Das Rückschicken einer solchen Quittung erfolgt zweckmäßig in umgekehrter Richtung unter Verwendung derselben Mechanismen, wie sie zuvor zur Erzeugung der signierten Transaktionsdaten eingesetzt wurden. Die Quittung wird demnach als zu interpretierender Datensatz erzeugt und mit einer Signatur versehen, anschließend in der Protokollwandlungseinrichtung 3 auf das für den persönlicher Computer 5 verarbeitbare Format umgesetzt, nach Schalten der Grafikkarte 20 in den Sicherheitsmodus an die Kryptoeinheit 31 übergeben, dort auf Richtigkeit der Signatur hin geprüft, auf dem Monitor 6 in einem gesonderten Fenster zur Anzeige gebracht und vom Nutzer über die Eingabeeinrichtung 7 bestätigt.

In einer zweiten Ausführung der Erfindung besitzt der persönliche Computer 5 eine über eine Schnittstelle 13 direkt mit der CPU 10 verbundene Eingabeeinrichtung 14. Die Grafikkarte 20 ist dabei genau wie anhand der ersten Ausführungsform beschrieben aufgebaut, weist aber keine Schnittstelle 22 auf, bzw. an die Schnittstelle 22 ist keine Eingabeeinrichtung 7 angeschlossen. Auch die Funktionsweise der zweiten Ausführung entspricht der der ersten Ausführung. Ausgenommen hiervon ist die Durchführung der Bestätigung der Transaktionsdaten nach deren Anzeige in Schritt 214.

Anders als bei der ersten Ausführung erfolgt die Bestätigung der auf dem Monitor 6 in Schritt 214 angezeigten Transaktionsdaten nun, indem die Kryptoeinheit 31 - im Sicherheitsmodus - eine logische Information in Form einer alphanumerischen oder symbolischen Zufallsinformation generiert, insbesondere eine Zufallszahl oder ein Zufallswort nach Art eines Einmalpaßwortes, und diese über die Konvertereinheit 29 auf dem Monitor 6 anzeigt wird. Die Anzeige erfolgt in demselben Fenster wie Transaktionsdaten. Zugleich wird der Nutzer durch eine begleitende Anzeige aufgefordert, in Reaktion auf die angezeigte alphanumerische oder symbolische Zufallsinformation diese über die mit der CPU verbundene Eingabeeinrichtung 14 einzugeben, Schritt 216. Der Nutzer gibt daraufhin die alphanumerische oder symbolische Zufallsinformation über die Eingabeeinrichtung 14 ein, von wo sie an die CPU gelangt, welche sie über die Bus/Energieschnittstelle 15 an die Kryptoeinheit 31 weiterleitet. Dort wird die eingegangene Zufallsinformation mit der angezeigten verglichen. Bei Übereinstimmung erzeugt die Kryptoeinheit 31 eine Signatur, Schritt 220. Stellt die Kryptoeinheit 31 dagegen eine Abweichung fest, erzeugt sie eine neue alphanumerische oder symbolische Zufallsinformation und zeigt diese an. Zweckmäßig ist die Zahl der Fehlversuche begrenzt. Die vom Nutzer eingegebene Zufallsinformation kann Teil der Signatur werden.

In einer Variante, die auch als Ergänzung zur Erzeugung und Eingabe einer alphanumerischen Zufallsinformation eingesetzt werden kann, erfolgt die Bestätigung von auf dem Monitor 6 angezeigten Transaktionsdaten, indem der Nutzer eine einmalige Zeichenkombination von alphanumerischen Zeichen eingibt. Die Zeichenkombination kann dabei nach dem Vorbild von TANs (Transaktionsnummern) gestaltet sein und liegt dem Nutzer typischerweise in Gestalt einer Papierliste vor. Eine korrekt eingegebene Ziffernkombination wird im Sicherheitsmodus als solche auf dem Monitor dargestellt und bestätigt damit die Transaktionsdaten.

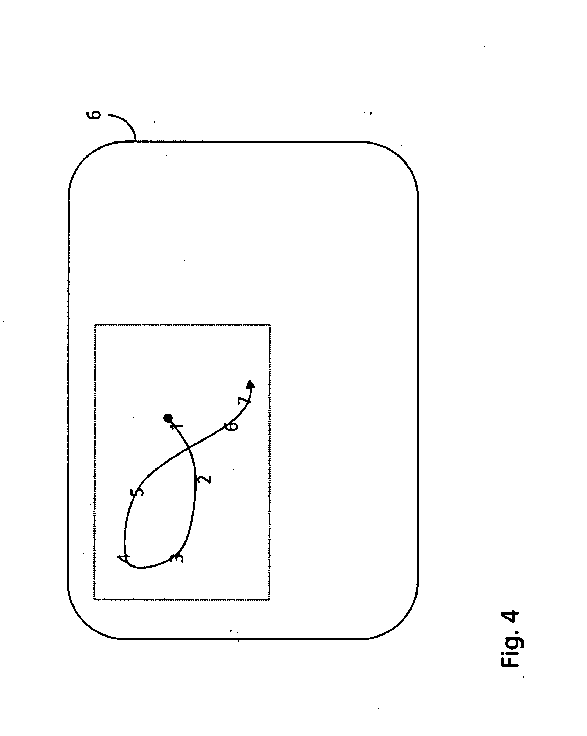

In einer weiteren, in Fig. 4 veranschaulichten Variante zur Eingabe einer angezeigten Zufallsinformation durch einen Nutzer kann vorgesehen sein, daß die die Kryptoeinheit 31 im Sicherheitsmodus eine Folge von logischen Informationen generiert, die sie über die gesamte oder eine Teilfläche verteilt auf dem Monitor 6 anzeigt. Die Anzeige kann beispielsweise, wie in Fig. 4 angedeutet, in Form einer Folge von aufeinanderfolgenden Ziffern oder als Folge von Buchstaben etwa eines Wortes erfolgen. Die Eingabeeinrichtung 14 erlaubt als Eingabe die Eingabe der Position einer auf dem Monitor 6 angezeigten Information. Vorzugsweise verfügt sie hierzu über eine Maus oder einen anderen Eingabesatelliten 140, der eine über die Position eines Cursers auf dem Monitor 6 gesteuerte Eingabe erlaubt. Der Nutzer nimmt nun mittels des Eingabesatelliten eine Eingabe vor, indem er die angezeigten Informationen in vorgegebener Reihenfolge anwählt, um den eine der Curserposition entsprechende Eingabe zu erzeugen. Beispielsweise kann vorgesehen sein, daß der Nutzer angezeigte Ziffern entsprechend ihrer Reihenfolge anwählt. Die Kryptoeinheit 31 prüft, ob die angezeigten Informationen in der richtigen Reihenfolge angewählt wurden. Die Verteilung der Ziffern unddamit die vom Nutzer einzugebende Positionsabfolge ist zufallsgesteuert und entsprechend bei jedem Aufruf neu. An die Stelle von Ziffern oder Buchstaben können auch einheitliche Symbole treten, die in einer vorab einheitlich festgelegten oder auf der Monitor 6 ausgegebenen Art und Weise miteinander verbunden werden müssen, z.B. linksherum beginnend oben rechts. Die Art und Weise der Verbindung kann dabei selbst zufallsgesteuert sein und mit den Symbolen angezeigt werden. Die in Fig. 4 veranschaulichte Variante eignet sich im übrigen unabhängig von der Verwendung innerhalb der vorstehend beschriebenen Erfindung auch als selbständige Lösung zur Erzeugung einer Eingabe, die nur von einem menschlicher Nutzer vorgenommen werden kann.

Unter vollständiger Beibehaltung der grundlegenden Idee, eine Grafikkarte so auszugestalten, daß die Bestätigung von zu bestätigenden Transaktionsdaten unmittelbar auf der Grafikkarte ohne Einschaltung der CPU des persönlichen Computers erfolgen kann, gestatten die vorbeschriebene Anordnung bzw. das vorbeschrieben Verfahren eine Vielzahl von Abwandlungen. So können vor allem die für die Grafikkarte beschriebenen Komponenten auf vielfältige Weise in Hardware und Software realisiert werden. Einzelne Funktionen bzw. Verfahrensschritte können dabei in anderen als den genannten Komponenten ausgeführt oder in einer Komponente zusammengefaßt werden; dies gilt beispielsweise für die Konvertereinheit 29 und die Kryptoeinheit 31 oder die Modussteuerung 27 und die Schalteinheit. Ähnlich können selbstverständlich das Datennetz oder das Hintergrundsystem aufwendige Strukturen besitzen und können in die Ausführung einer Transaktion mehrere persönlicher Computer oder Hintergrundsysteme einbezogen sein. Selbstverständlich eignet sich die erfindungsgemäße Lösung daneben auch zur Verwendung in anderen als den ausdrücklich genannten Transaktionen.

## Patentansprüche

1. Verfahren zur Erzeugung bestätigter Transaktionsdaten mittels eines persönlichen Computers mit einem Monitor, der durch eine Anzeigevorbereitungseinheit angesteuert wird, die von der CPU des persönlichen Computers Grafikdaten erhält, aus denen sie Pixelgrafiken erzeugt, **gekennzeichnet durch** die Schritte:
Bereitstellen einer Konvertereinheit (29) auf der Anzeigevorbereitungseinheit (20), die es erlaubt zu interpretierende Daten in Pixelwerte umzusetzen,
Bereitstellen eines Echtdatenspeichers (30) auf der Anzeigevorbereitungseinheit (20) zur Aufnahme von zu interpretierenden Daten,
Bereitstellen einer Kryptoeinheit (31) auf der Anzeigevorbereitungseinheit (20) zum Erzeugen einer Signatur zu einem Satz zu interpretierender Daten,
Bereitstellen einer Nutzer-Eingabeeinrichtung (7,14), um Nutzereingaben an die Kryptoeinheit (31) zu leiten,
Starten einer Anwendung, in der Transaktionsdaten verarbeitet werden (200),
Aufbereiten der Transaktionsdaten als zu interpretierende Daten auf dem persönlichen Computer (5) unter Steuerung einer Anwendungssoftware (12),
Zuführen der zu interpretierenden Transaktionsdaten an die Konvertereinheit (204),
Ablegen der zu interpretierenden Transaktionsdaten in dem Echtdatenspeicher (30),
Umsetzen der zu interpretierenden Transaktionsdaten in Pixelwerte durch die Konvertereinheit (214),
Anzeigen der Pixelwerte auf dem Monitor (214),
Herstellen einer Verbindung zwischen einer Nutzer-Eingabeeinrichtung (7,14) und der Kryptoeinheit (31), welche die Eingabe eines Bestätigungssignales nur **durch** einen Nutzer zuläßt,
Eingabe eines Bestätigungssignales **durch** einen Nutzer über eine Nutzer-Eingabeeinrichtung (218),
Erzeugen einer Signatur über die im Echtdatenspeicher (30) gespeicherten Transaktionsdaten nach Eingabe eines Bestätigungssignales **durch** einen Nutzer (220),
Zusammenfügen der Signatur und der Transaktionsdaten zu bestätigten Transaktionsdaten.

2. Verfahren nach Anspruch 1, **gekennzeichnet durch** folgende weitere Schritte:
Bereitstellen einer Schnittstelle (22) für eine NutzerEingabeeinrichtung (7) auf der Anzeigevorbereitungseinheit(20), um
darüber Nutzereingaben direkt an die Kryptoeinheit (31) zu leiten, Herstellen einer Direktverbindung zwischen einer NutzerEingabeeinrichtung (7) und der Kryptoeinheit (31) für die Eingabe des Bestätigungssignales **durch** einen Nutzer nach dem Anzeigen der Pixelwerte auf dem Monitor (6).

3. Verfahren nach Anspruch 1, **dadurch gekennzeichnet, daß** die bestätigten Transaktionsdaten an die durch die Anwendungssoftware (12) ausgeführte Anwendung zurückgegeben werden (230).

4. Verfahren nach Anspruch 1, **dadurch gekennzeichnet, daß** die bestätigten Transaktionsdaten an eine Protokollwandlereinheit (3) geschickt werden (226), welche die Signatur prüft und die Transaktionsdaten in ein auf ein Hintergrundsystem (1) abgestimmtes Protokoll umsetzt.

5. Verfahren nach Anspruch 1, **dadurch gekennzeichnet, daß** nach Erkennen des Eingangs der zu interpretierenden Transaktionsdaten in der Anzeigevorbereitungseinheit (20) auf dem Monitor (6) ein vorgegebenes Startbild angezeigt wird (210).

6. Verfahren nach Anspruch 1, **dadurch gekennzeichnet, daß** das Anzeigen der Pixelwerte in einem gesonderten Fenster erfolgt, das einer vorhandenen Anzeige überlagert wird.

7. Verfahren nach Anspruch 1, **dadurch gekennzeichnet, daß** nach Erkennen des Eingangs der zu interpretierenden Transaktionsdaten in der Anzeigevorbereitungseinheit (20) weitere zu interpretierende Transaktionsdaten zunächst nicht mehr entgegengenommen werden.

8. Verfahren nach Anspruch 1, **gekennzeichnet dadurch, daß** die Herstellung der Verbindung zwischen Nutzer-Eingabeeinrichtung (14) und Kryptoeinheit (31) durch folgende Schritte erfolgt:
Erzeugen einer alphanumerischen und/oder symbolischen Zufallsinformation auf der Anzeigevorbereitungseinheit (20) und Anzeigen auf dem Monitor (6),
Anfordern einer Eingabe in Reaktion auf die angezeigte alphanumerische oder symbolische Zufallsinformation über die NutzerEingabeeinrichtung (14) des persönlichen Computers (5) durch einen Nutzer,
Vergleichen der angezeigten und der vom Nutzer eingegebenen alphanumerischen Zufallsinformation auf der Anzeigevorbereitungseinheit (20).

9. Verfahren nach Anspruch 8, **gekennzeichnet dadurch, daß** in Reaktion auf die angezeigte alphanumerische oder symbolische Zufallsinformation die Eingabe der auf dem Monitor (6) angezeigten alphanumerischen oder symbolischen Zufallsinformation über die NutzerEingabeeinrichtung (14) angefordert wird.

10. Verfahren nach Anspruch 8, **gekennzeichnet dadurch, daß** in Reaktion auf die angezeigte alphanumerische oder symbolische Zufallsinformation die Eingabe der Position wenigstens einer alphanumerischen oder symbolischen Zufallsinformation auf dem Monitor (6) über die Nutzer-Eingabeeinrichtung (14) angefordert wird.

11. Verfahren nach Anspruch 10, **gekennzeichnet dadurch, daß** die alphanumerische oder symbolische Zufallsinformation aus einer Folge von Zahlen oder Buchstaben besteht, deren Positionen auf dem Monitor (6) in einer vorgegebenen Reihenfolge eingegeben werden müssen.

12. Anzeigevorbereitungseinheit zur Erzeugung von Pixelgrafiken zur Ausgabe auf einem Monitor mit einer Schnittstelle zur Entgegennahme von Grafikdaten von der CPU eines persönlichen Computers, einer Schnittstelle zur Übergabe von Pixelgrafiken an einen Monitor, einer Schnittstelle (22) zum Anschluß einer Eingabeeinrichtung (7) und einer Schnittstelle zum Bezug einer Energieversorgung von dem Persönlicher Computer,
**gekennzeichnet durch**
eine Modussteuerung (27) zur Entgegennahme von Daten von der CPU (10) des persönlichen Computers (5) und zur Auswertung, ob die entgegengenommenen Daten Grafikdaten oder interpretierende Transaktionsdaten sind sowie zum Schalten der Anzeigevorbereitungseinheit (20) in einen Sicherheitsmodus,
einen Echtdatenspeicher (30) zur Aufnahme von zu interpretierenden Transaktionsdaten,
eine Konvertereinheit (29), die dazu eingerichtet ist zu interpretierende Transaktionsdaten in Pixelwerte umzusetzen,
eine Kryptoeinheit (31) zur Erzeugung einer Signatur zu einem Satz von im Echtdatenspeicher (30) gespeicherten, zu interpretierenden Transaktionsdaten, und
eine von der Modussteuerung (27) betätigten Schalteinheit (28) zur Verbindung einer Eingabeeinrichtung (7) mit der Kryptoeinheit (31) im Sicherheitsmodus, um es einem Nutzer zu ermöglichen der Kryptoeinheit (31) über die Eingabeeinrichtung (7) direkt eine von ihm eingegebene Information zuzuleiten.

13. Einheit nach Anspruch 12, **dadurch gekennzeichnet, daß** der Kryptoeinheit (31) ein Sicherheitselement zur Aufnahme einer bei der Erstellung einer Signatur benötigten nutzerspezifischen Information zugeordnet ist, das eine Direktschnittstelle (28) besitzt, über die weitere nutzerspezifische Informationen eingebracht werden könne.

14. Einheit nach Anspruch 13, **dadurch gekennzeichnet, daß** das Sicherheitselement (32) von der Anzeigevorbereitungseinheit (20) lösbar ausgebildet ist.

15. Einheit nach Anspruch 12, **dadurch gekennzeichnet, daß** die Kryptoeinheit (31) und die Konvertereinheit (29) in einem manipulationssicheren Gehäuse untergebracht sind.

16. Einheit nach Anspruch 12, **dadurch gekennzeichnet, daß** sie eine weitere Schnittstelle (23) zum direkten Anschluß einer Authentifizierungseinrichtung (8) aufweist.

17. Einheit nach Anspruch 12, **dadurch gekennzeichnet, daß** sie zum Zwischenspeichern von zu interpretierenden Daten einen Echtdatenspeicher aufweist, auf den nur Kryptoeinheit (31), Konvertereinheit (29) und Modussteuerung (27) zugreifen können, während über die Schnittstelle (15) zur CPU (10) nicht zugegriffen werden kann

18. Anzeigevorbereitungseinheit zur Erzeugung von Pixelgrafiken zur Ausgabe auf einem Monitor mit einer Schnittstelle zur Entgegennahme von Grafikdaten von der CPU eines persönlichen Computers, einer Schnittstelle zur Übergabe von Pixelgrafiken an einen Monitor und einer Schnittstelle zum Bezug einer Energieversorgung von dem persönlichen Computer,
**gekennzeichnet durch**
eine Modussteuerung (27) zur Entgegennahme von Daten von der CPU (10) des persönlichen Computers (5) und zur Auswertung, ob die entgegengenommenen Daten Grafikdaten oder interpretierende Transaktionsdaten sind sowie zum Schalten der Anzeigevorbereitungseinheit (20) in einen Sicherheitsmodus,
einen Echtdatenspeicher (30) zur Aufnahme von zu interpretierenden Transaktionsdaten,
eine Kryptoeinheit (31), die zur Erzeugung einer alphanumerischen Zufallsinformation im Sicherheitsmodus und zu deren Vergleich mit einer von der CPU (10) zugeführten alphanumerischen Zufallsinformation, sowie weiterhin zur Erzeugung einer Signatur zu einem Satz von im Echtdatenspeicher (30) gespeicherten, zu interpretierenden Transaktionsdaten eingerichtet ist, und
eine Konvertereinheit (29), die dazu eingerichtet ist zu interpretierende Transaktionsdaten in Pixelwerte umzusetzen und die ferner dazu eingerichtet ist eine von der Kryptoeinheit (31) erzeugte alphanumerischen Zufallsinformation auf dem Monitor (6) anzuzeigen.

19. System zur Ausführung einer Transaktion, in deren Rahmen Transaktionsdaten verarbeitet werden, die von einem Nutzer bestätigt werden müssen, aufweisend:
ein Datennetz (2),
ein Hintergrundsystem (1), das in Software realisierte Dienstleistungen bereitstellt, die mit Hilfe einer Anwendungssoftware über das Datennetz (2) abrufbar sind, sowie
einen persönlichen Computer (5) mit Monitor (6) und Eingabeeinrichtung (7), der zur Ausführung einer Anwendungssoftware eingerichtet ist,
**dadurch gekennzeichnet, daß**
der persönlichen Computer (5) eine Anzeigevorbereitungseinheit (20) gemäß Anspruch 12 aufweist und die Transaktionsdaten nach dem Verfahren gemäß Anspruch 1 bestätigt werden.

## Claims

1. A method for generating confirmed transaction data by means of a personal computer with a monitor that is driven by a display preparation unit which receives graphics data from the CPU of the personal computer, from which graphics data it generates pixel graphics, **characterized by** the steps of:
making available on the display preparation unit (20) a converter unit (29) permitting to convert data to be interpreted into pixel values,
making available on the display preparation unit (20) a real data memory (30) for accommodating data to be interpreted,
making available on the display preparation unit (20) a crypto unit (31) for generating a signature for a record of data to be interpreted,
making available a user input device (7, 14) to pass user inputs to the crypto unit (31),
starting an application in which transaction data are processed (200),
pre-processing the transaction data as data to be interpreted on the personal computer (5) under the control of an application software (12),
supplying the transaction data to be interpreted to the converter unit (204),
storing the transaction data to be interpreted in the real data memory (30),
converting the transaction data to be interpreted into pixel values by the converter unit (214),
displaying the pixel values on the monitor (214),
producing a connection between a user input device (7, 14) and the crypto unit (31) that permits the inputting of a confirmation signal only by a user,
inputting a confirmation signal by a user via a user input device (218),
generating a signature for the transaction data stored in the real data memory (30) after the input of a confirmation signal by a user (220).
joining the signature and the transaction data to form confirmed transaction data.

2. The method according to claim 1, **characterized by** the following further steps of:
making available on the display preparation unit (20) an interface (22) for a user input device (7) to pass user inputs directly to the crypto unit (31) via said interface,
producing a direct connection between a user input device (7) and the crypto unit (31) for the input of the confirmation signal by a user after the pixel values have been displayed on the monitor (6).

3. The method according to claim 1, **characterized in that** the confirmed transaction data are returned (230) to the application executed by the application software (12).

4. The method according to claim 1, **characterized in that** the confirmed transaction data are sent (226) to a protocol converter unit (3) that checks the signature and converts the transaction data into a protocol that is coordinated with a background system (1).

5. The method according to claim 1, **characterized in that** after recognizing the receipt of the transaction data to be interpreted in the display preparation unit (20) a predetermined start image is displayed (210) on the monitor (6).

6. The method according to claim 1, **characterized in that** the display of the pixel values takes place in an extra window that is overlaid on an existing display.

7. The method according to claim 1, **characterized in that** after recognizing the receipt of the transaction data to be interpreted in the display preparation unit (20), further transaction data to be interpreted are no longer accepted for the time being.

8. The method according to claim 1, **characterized in that** the production of the connection between the user input device (14) and the crypto unit (31) takes place by the following steps of:
generating alphanumeric and/ or symbolic random information on the display preparation unit (20) and displaying said information on the monitor (6),
requesting an input in reaction to the displayed alphanumeric or symbolic random information via the user input device (14) of the personal computer (5) by a user, comparing the displayed alphanumeric random information and that which was input by the user on the display preparation unit (20).

9. The method according to claim 8, **characterized in that** in reaction to the displayed alphanumeric or symbolic random information the input of the alphanumeric or symbolic random information displayed on the monitor (6) via the user input device (14) is requested.

10. The method according to claim 8, **characterized in that** in reaction to the displayed alphanumeric or symbolic random information the input of the position of at least one alphanumeric or symbolic random information item on the monitor (6) via the user input device (14) is requested.

11. The method according to claim 10, **characterized in that** the alphanumeric or symbolic random information consists of a sequence of numbers or letters, whose positions on the monitor (6) must be input in a predetermined order.

12. A display preparation unit for generating pixel graphics to be output on a monitor, having an interface for accepting graphics data from the CPU of a personal computer, an interface for transferring pixel graphics to a monitor, an interface (22) for attaching an input device (7) and an interface for drawing an energy supply from the personal computer, **characterized by**
a mode control (27) for accepting data from the CPU (10) of the personal computer (5) and for evaluating whether the accepted data are graphics data or transaction data to be interpreted, as well as for switching the display preparation unit (20) to a security mode,
a real data memory (30) for accommodating transaction data to be interpreted,
a converter unit (29) adapted to convert transaction data to be interpreted into pixel values, a crypto unit (31) for generating a signature for a record of transaction data to be interpreted that is stored in the real data memory (30), and
a switching unit (28) operated by the mode control (27) for connecting an input device (7) with the crypto unit (31) in the security mode, so as to enable a user to directly forward an information item input by him to the crypto unit (31) via the input device (7).

13. The unit according to claim 12, **characterized in that** to the crypto unit (31) there is allocated a security element for accommodating user-specific information that is required upon generating a signature, said security element having a direct interface (28) via which further user-specific information can be incorporated.

14. The unit according to claim 13, **characterized in that** the security element (32) is configured to be detachable from the display preparation unit (20).

15. The unit according to claim 12, **characterized in that** the crypto unit (31) and the converter unit (29) are housed in a tamper-resistant housing.

16. The unit according to claim 12, **characterized in that** it has a further interface (23) for directly attaching an authentication device (8).

17. The unit according to claim 12, **characterized in that** it has a real data memory for intermediately storing data to be interpreted, which real data memory can be accessed only by the crypto unit (31), the converter unit (29) and the mode control (27), whereas no access is possible via the interface (15) to the CPU (10).

18. A display preparation unit for generating pixel graphics to be output on a monitor, having an interface for accepting graphics data from the CPU of a personal computer, an interface for transferring pixel graphics to a monitor and an interface for drawing an energy supply from the personal computer,
**characterized by**
a mode control (27) for accepting data from the CPU (10) of the personal computer (5) and for evaluating whether the accepted data are graphics data or transaction data to be interpreted, as well as for switching the display preparation unit (20) to a security mode,
a real data memory (30) for accommodating transaction data to be interpreted,
a crypto unit (31) adapted to generate alphanumeric random information in the security mode and to compare said random information with alphanumeric random information supplied by the CPU (10), and further to generate a signature for a record of transaction data to be interpreted which is stored in the real data memory (30), and
a converter unit (29) adapted to convert transaction data to be interpreted into pixel values, and further adapted to display on the monitor (6) alphanumeric random information generated by the crypto unit (31).

19. A system for executing a transaction within the framework of which transaction data are processed that must be confirmed by a user, having:
a data network (2),
a background system (1) making available services realized in software, said services being retrievable with the aid of an application software via the data network (2), as well as a personal computer (5) with a monitor (6) and an input device (7), said personal computer being adapted to execute an application software,
**characterized in that**
the personal computer (5) has a display preparation unit (20) according to claim 12 and the transaction data are confirmed in accordance with the method according to claim 1.

## Revendications

1. Procédé de génération de données de transaction confirmées, au moyen d'un ordinateur personnel comportant un moniteur commandé par une unité de préparation d'affichage qui reçoit de la part de la CPU de l'ordinateur personnel des données graphiques à partir desquelles elle génère des graphiques pixel, **caractérisé par** les étapes suivantes :
mise à disposition, sur l'unité de préparation d'affichage (20), d'une unité de convertisseur (29) qui permet de convertir en valeurs de pixel des données à interpréter,
mise à disposition, sur l'unité de préparation d'affichage (20), d'une mémoire de données réelles (30) pour la réception de données à interpréter,
mise à disposition, sur l'unité de préparation d'affichage (20), d'une unité de cryptographie (31) pour la génération d'une signature concernant un lot de données à interpréter,
mise à disposition d'un dispositif d'entrée utilisateur (7, 14) pour transmettre des entrées utilisateur à l'unité de cryptographie (31),
démarrage d'une application dans laquelle des données de transaction sont traitées (200),
conditionnement des données de transaction en tant que données à interpréter sur l'ordinateur personnel (5) en ayant recours à la commande d'un logiciel d'application (12),
transfert des données de transaction à interpréter à l'unité de convertisseur (204),
stockage des données de transaction à interpréter dans la mémoire de données réelles (30),
conversion des données de transaction à interpréter en valeurs de pixel par l'unité de convertisseur (214),
affichage des valeurs de pixel sur le moniteur (214),
mise en place d'une liaison entre un dispositif d'entrée utilisateur (7, 14) et l'unité de cryptographie (31), laquelle n'autorise l'entrée d'un signal de confirmation que par un utilisateur,
entrée d'un signal de confirmation par un utilisateur par l'intermédiaire d'un dispositif d'entrée utilisateur (218),
génération d'une signature sur les données de transaction mémorisées dans la mémoire de données réelles (30) après entrée d'un signal de confirmation par un utilisateur (220),
jonction de la signature et des données de transaction aboutissant à des données de transaction confirmées.

2. Procédé selon la revendication 1, **caractérisé par** les étapes supplémentaires suivantes :
mise à disposition d'une interface (22) pour un dispositif d'entrée utilisateur (7) sur l'unité de préparation d'affichage (20), afin de transmettre directement par cet intermédiaire des entrées d'utilisateur à l'unité de cryptographie (31),
mise en place d'une liaison directe entre un dispositif d'entrée utilisateur (7) et l'unité de cryptographie (31) pour l'entrée du signal de confirmation par un utilisateur après l'affichage des valeurs de pixel sur le moniteur (6).

3. Procédé selon la revendication 1, **caractérisé en ce que** les données de transaction confirmées sont redonnées (230) à l'application exécutée par le logiciel d'application (12).

4. Procédé selon la revendication 1, **caractérisé en ce que** les données de transaction confirmées sont envoyées (226) à une unité de convertisseur de protocoles (3) qui vérifie la signature et convertit les données de transaction en un protocole accordé à un système d'arrière-plan (1).

5. Procédé selon la revendication 1, **caractérisé en ce que**, après reconnaissance, dans l'unité de préparation d'affichage (20), de l'entrée des données de transaction à interpréter, une image de démarrage prédéterminée est affichée (210) sur le moniteur (6).

6. Procédé selon la revendication 1, **caractérisé en ce que** l'affichage des valeurs de pixel a lieu dans une fenêtre à part qui est superposée à un affichage existant.

7. Procédé selon la revendication 1, **caractérisé en ce que**, après reconnaissance, dans l'unité de préparation d'affichage (20), de l'entrée des données de transaction à interpréter, des données de transaction supplémentaires à interpréter ne sont tout d'abord plus réceptionnées.

8. Procédé selon la revendication 1, **caractérisé en ce que** la mise en place de la liaison entre dispositif d'entrée utilisateur (14) et unité de cryptographie (31) a lieu par les étapes suivantes :
génération d'une information aléatoire alphanumérique et/ou symbolique sur l'unité de préparation d'affichage (20) et affichage sur le moniteur (6), sollicitation, en réaction à l'information aléatoire alphanumérique ou
symbolique affichée, d'une entrée par l'intermédiaire du dispositif d'entrée utilisateur (14) de l'ordinateur personnel (5) par un utilisateur,
comparaison de l'information aléatoire alphanumérique affichée et de celle entrée par l'utilisateur sur l'unité de préparation d'affichage (20).

9. Procédé selon la revendication 8, **caractérisé en ce que**, en réaction à l'information aléatoire alphanumérique ou symbolique affichée, l'entrée de l'information aléatoire alphanumérique ou symbolique affichée sur le moniteur (6) par l'intermédiaire du dispositif d'entrée utilisateur (14) est sollicitée.

10. Procédé selon la revendication 8, **caractérisé en ce que**, en réaction à l'information aléatoire alphanumérique ou symbolique affichée, l'entrée de la position d'au moins une information aléatoire alphanumérique ou symbolique sur le moniteur (6) par l'intermédiaire du dispositif d'entrée utilisateur (14) est sollicitée.

11. Procédé selon la revendication 10, **caractérisé en ce que** l'information aléatoire alphanumérique ou symbolique consiste en une suite de chiffres ou de lettres dont les positions sur le moniteur (6) doivent être entrées dans un ordre prédéterminé.

12. Unité de préparation d'affichage destinée à la génération de graphiques pixel pour la sortie sur un moniteur, comportant une interface pour le réceptionnement de données graphiques de la CPU d'un ordinateur personnel, une interface pour la livraison de graphiques pixel à un moniteur, une interface (22) pour la connexion d'un dispositif d'entrée (7) et une interface pour le prélèvement d'un approvisionnement en énergie de l'ordinateur personnel,
**caractérisée par**
une commande de mode (27) pour le réceptionnement de données de la CPU (10) de l'ordinateur personnel (5) et pour l'évaluation si les données réceptionnées sont des données graphiques ou des données de transaction interprétatives ainsi que pour la commutation de l'unité de préparation d'affichage (20) sur un mode sécurité,
une mémoire de données réelles (30) pour la réception de données de transaction à interpréter,
une unité de convertisseur (29) qui est configurée pour convertir en valeurs de pixel des données de transaction à interpréter,
une unité de cryptographie (31) pour la génération d'une signature concernant un lot de données de transaction à interpréter mémorisées dans la mémoire de données réelles (30), et
une unité de commutation (28) actionnée par la commande de mode (27) pour la liaison d'un dispositif d'entrée (7) avec l'unité de cryptographie (31) dans le mode sécurité afin de permettre à un utilisateur de transmettre directement à l'unité de cryptographie (31) par l'intermédiaire du dispositif d'entrée (7) une information entrée par lui.

13. Unité selon la revendication 12, **caractérisée en ce qu'**il est affecté à l'unité de cryptographie (31) un élément de sécurité qui est destiné à la réception d'une information spécifique de l'utilisateur requise lors de l'élaboration d'une signature et qui possède une interface (28) par l'intermédiaire de laquelle des informations spécifiques de l'utilisateur supplémentaires peuvent être insérées.

14. Unité selon la revendication 13, **caractérisée en ce que** l'élément de sécurité (32) est réalisé sous forme détachable de l'unité de préparation d'affichage (20).

15. Unité selon la revendication 12, **caractérisée en ce que** l'unité de cryptographie (31) et l'unité de convertisseur (29) sont logées dans un boîtier inmanipulable.

16. Unité selon la revendication 12, **caractérisée en ce qu'**elle comporte une interface (23) supplémentaire pour la connexion directe d'un dispositif d'authentification (8).

17. Unité selon la revendication 12, **caractérisée en ce que**, pour la mémorisation temporaire de données à interpréter, elle comporte une mémoire de données réelles sur laquelle n'ont accès que unité de cryptographie (31), unité de convertisseur (29) et commande de mode (27), tandis que, par l'intermédiaire de l'interface (15), il n'est pas possible d'avoir accès à la CPU (10).

18. Unité de préparation d'affichage destinée à la génération de graphiques pixel pour la sortie sur un moniteur, comprenant une interface pour le réceptionnement de données graphiques de la CPU d'un ordinateur personnel, une interface pour la livraison de graphiques pixel à un moniteur et une interface pour le prélèvement d'un approvisionnement en énergie de l'ordinateur personnel,
**caractérisée par**
une commande de mode (27) pour le réceptionnement de données de la CPU (10) de l'ordinateur personnel (5) et pour l'évaluation si les données réceptionnées sont des données graphiques ou des données de transaction interprétatives ainsi que pour la commutation de l'unité de préparation d'affichage (20) sur un mode sécurité,
une mémoire de données réelles (30) pour la réception de données de transaction à interpréter,
une unité de cryptographie (31) qui est configurée pour la génération d'une information aléatoire alphanumérique en mode sécurité et pour sa comparaison avec une information aléatoire alphanumérique transférée par la CPU (10), ainsi qu'en outre pour la génération d'une signature concernant un lot de données de transaction à interpréter mémorisées dans la mémoire de données réelles (30), et
une unité de convertisseur (29) qui est configurée pour convertir en valeurs de pixel des données de transaction à interpréter et qui est en outre configurée pour afficher sur le moniteur (6) une information aléatoire alphanumérique générée par l'unité de cryptographie (31).

19. Système d'exécution d'une transaction dans le cadre de laquelle des données de transaction devant être confirmées par un utilisateur sont traitées, comportant :
un réseau de données (2),
un système d'arrière-plan (1) qui met à disposition des services réalisés en logiciel et accessibles par l'intermédiaire du réseau de données (2) à l'aide d'un logiciel d'application, ainsi que
un ordinateur personnel (5) comportant un moniteur (6) et un dispositif d'entrée (7), qui est configuré pour l'exécution d'un logiciel d'application,
**caractérisé en ce que**
l'ordinateur personnel (5) comporte une unité de préparation d'affichage (20) selon la revendication 12 et **en ce que** les données de transaction sont confirmées suivant un procédé selon la revendication 1.
